# EUROPEAN PATENT SPECIFICATION

(11) **EP 3 184 230 B1**
(45) Date of publication and mention of the grant of the patent: **28.04.2021**
(21) Application number: 16204618.9
(22) Date of filing: 16.12.2016
(51) Int. Cl.: B23K 26/06, B23K 26/38, B23K 26/402

(54) **SYSTEM AND METHOD FOR SHAPING A CERAMIC MATRIX COMPOSITE (CMC) SHEET**
SYSTEM UND VERFAHREN ZUR FORMUNG EINER FOLIE AUS KERAMIKMATRIXVERBUNDSTOFF (CMC)
SYSTÈME ET PROCÉDÉ DE FAÇONNAGE D'UNE FEUILLE EN COMPOSITE À MATRICE CÉRAMIQUE (CMC)

(30) Priority: 18.12.2015 US 201514974047
(43) Date of publication of application: 28.06.2017
(73) Proprietor: General Electric Company, Schenectady, NY 12345 (US)
(72) Inventor: Chen, Hongqiang, Niskayuna, NY 12309 (US); Hayashi, Steven Robert, Niskayuna, NY 12309 (US); Lee, Martin Kin-Fei, Niskayuna, NY 12309 (US); Garg, Nitin, Niskayuna, NY 12309 (US); Cousineau, Nolan Leander, Niskayuna, NY 12309 (US); Knotts, Derrick Wayne, Niskayuna, NY 12309 (US)
(74) Representative: Openshaw & Co.

(56) References cited:
- US-A1- 2006 121 265
- US-A1- 2013 068 736

## Description

### BACKGROUND

Embodiments of the present specification relate generally to a ceramic matrix composite (CMC) sheet, and more particularly to a system and method for shaping the CMC sheet in a predetermined shape.

Due to their high crack resistance or fracture toughness, CMC materials are used in the form of sheets to fabricate composite structures, such as aircraft wings, fan casing, and aircraft fuselages, automotive industries, marine industries, and others. Typically, CMC sheets are made of fiber ply materials. In one example, the CMC sheets are used as tapes over a surface of the composite structure at different angles to maximize the strength of the composite structure. To improve the strength and quality of the structure, it is desirable to have the CMC material disposed in a predetermined shape on the structure. In general, the tapes are repeatedly rolled over the surface of the structure in a pre-defined pattern, building up layers of the tapes until a layup has been formed on the structure.

In a conventional system, a mechanical tool is used to cut the CMC sheet into one or more predetermined shapes that are desired for fabricating the composite structures. In one example, a diamond wheel is used as the mechanical tool to cut the CMC sheet. More specificailly, the diamond wheel is physically placed on the CMC sheet and mechanical force is applied on the diamond wheel to cut the CMC sheet. However, this mechanical force on the CMC sheet may cause fiber wear out and/or fiber deformation, which in turn may cause large and undesirable variation in the size and/or shape of the predetermined shapes that are cut from the CMC sheet. In some circumstances, this variation in the size and/or shape of the CMC sheet may not meet design tolerance requirement of the system employing the structure having the CMC sheet/predertermined shapes of the CMC sheet.

Document US2006121265 discloses a method of cutting out airfoil-shaped CMC laminates from a flat plate by water jet or laser cutting.

### BRIEF DESCRIPTION

In accordance with aspects of the present specification, a method according to claim 1 for shaping a ceramic matrix composite (CMC) sheet having a first surface and a second surface is presented. The method includes receiving an input signal representative of a predetermined shape and a type of the CMC sheet. Further, the method includes selecting a laser beam based on the received input signal. Also, the method includes projecting the selected laser beam on the CMC sheet to shape the CMC sheet into the predetermined shape.

It is herein disclosed a laser device for shaping a ceramic matrix composite (CMC) sheet is presented. The laser device includes a user interface configured to receive an input signal representative of a predetermined shape and a type of the CMC sheet. Further, the laser device includes a processor coupled to the user interface and configured to select a laser beam based on the received input signal. Also, the laser device includes a beam generating unit coupled to the processor and configured to project the selected laser beam on the CMC sheet to shape the CMC sheet into the predetermined shape.

In accordance with another aspect of the present specification, a system according to claim 6 for shaping a ceramic matrix composite (CMC) sheet in a predetermined shape is presented. The system includes a base plate configured to support the CMC sheet having a first surface and a second surface, wherein the base plate is coupled to the second surface of the CMC sheet. Further, the system includes a laser device including a user interface configured to receive an input signal representative of a predetermined shape and a type of the CMC sheet. Also, the laser device includes a processor coupled to the user interface and configured to select a laser beam based on the received input signal. Furthermore, the laser device includes a beam generating unit coupled to the processor and configured to project the selected laser beam on the first surface of the CMC sheet to shape the CMC sheet in the predetermined shape.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of a laser based system for shaping a ceramic matrix composite (CMC) sheet, in accordance with aspects of the present specification;
FIG. 2 is a diagrammatical representation of a work table unit used in the laser based system of FIG. 1, in accordance with one embodiment of the present specification;
FIG. 3 is a diagrammatical representation of a work table unit used in the laser based system of FIG. 1, in accordance with another embodiment of the present specification; and
FIG. 4 is a flow chart illustrating an exemplary method for shaping a CMC sheet, in accordance with aspects of the present specification.

### DETAILED DESCRIPTION

As will be described in detail hereinafter, various embodiments of exemplary systems and methods for shaping a sheet made of a ceramic matrix composite (CMC) material are presented. CMC materials include ceramic fibers that are disposed in a ceramic matrix. The CMC materials may also be referred to as "ceramic fiber reinforced ceramic" (CFRC) or "fiber reinforced ceramic" (FRC). In particular, a CMC sheet is shaped into a predetermined shape with minimal or zero wear or deformation of the CMC sheet.

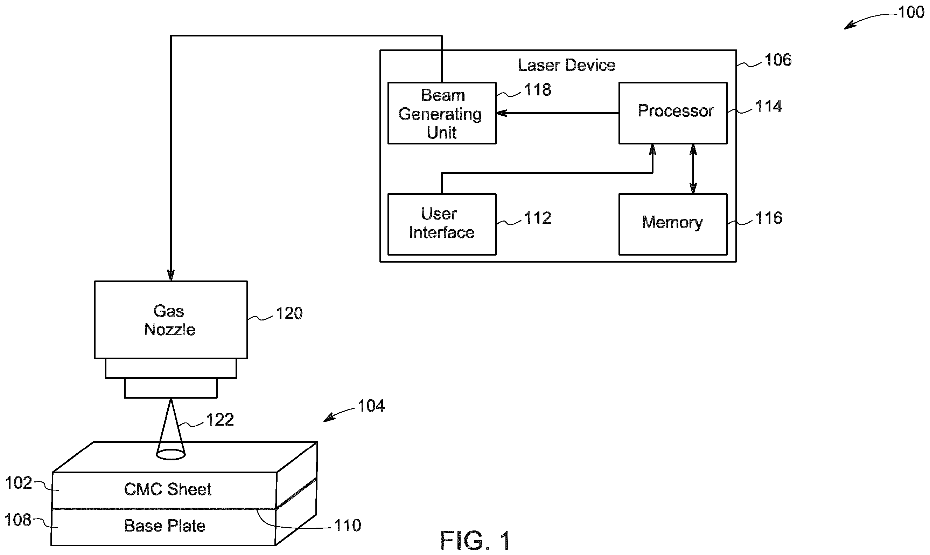

Turning now to the drawings and referring to FIG. 1, a diagrammatical representation of a laser based system 100 for shaping a ceramic matrix composite (CMC) sheet 102, in accordance with aspects of the present specification, is depicted. The laser based system 100 is configured to project one or more laser beams 122 over the CMC sheet 102 to shape or cut the CMC sheet 102 into a predetermined shape. It may be noted that the predetermined shape may be any shape that is desired by a user. In one example, the CMC sheet 102 may be silicon carbide material or carbon fiber material having a plurality of fibers. It may be noted that the terms "CMC sheet" and "CMC ply material" may be used interchangeably throughout the application. In one embodiment, the CMC sheet 102 may be used as a pre-peg ply tape that is used to fabricate one or more composite structures. In one example, the CMC sheet 102 may have a thickness in a range from about 0.005 inch to about 0.010 inch.

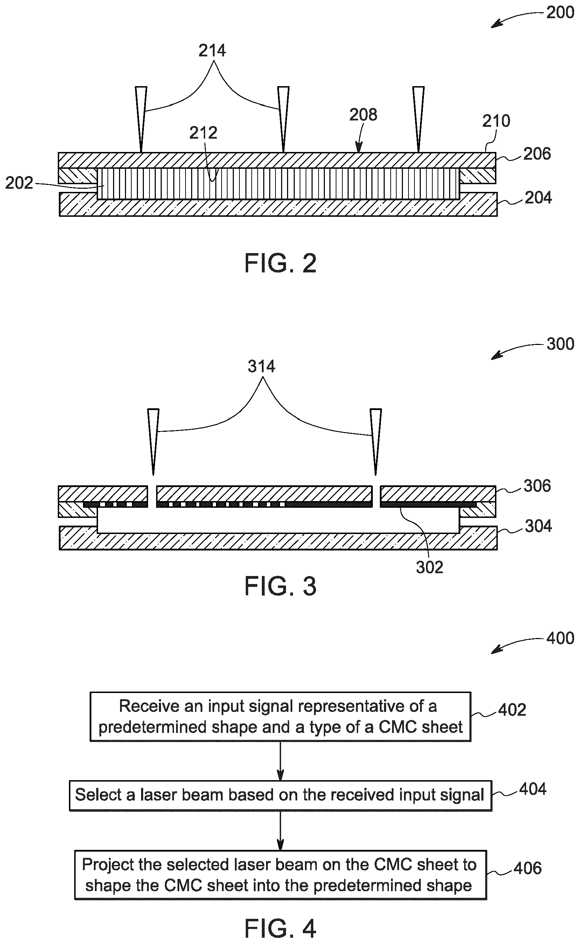

In a presently contemplated configuration, the laser based system 100 includes a work table unit 104 and a laser device 106. In operation, the CMC sheet 102 is disposed on the work table unit 104 as the laser device 106 shapes the CMC sheet 102 into a predetermined shape. As depicted in FIG. 1, the work table unit 104 includes a base plate 108 with one or more holding components (not shown). The holding components may be used to fasten the CMC sheet 102 to the base plate 108. The CMC sheet 102 is placed on a first surface 110 of the base plate 108. In one example, the CMC sheet 102 may be a thin tape that is spread or placed over the base plate 108. In addition to the base plate 108, the work table unit 104 may include an exhaust or vacuum chamber to collect the particles or fume generated during shaping of the CMC sheet 102. Also, the vacuum chamber is used to keep a focus position of the laser beams 122 that are passing through the CMC sheet 102. In addition, the vacuum chamber may ensure that the CMC sheet 102 stay in a steady position under the gas nozzle 120 during shaping of the CMC sheet 102. In accordance with the invention, the work table unit 104 includes a fire retardant structure, which is explained in greater detail with reference to FIGs. 2 and 3.

Furthermore, the laser device 106 may be positioned at a predefined height from the work table unit 104. The laser device 106 may include a user interface 112, a processor 114, a memory 116, a beam generating unit 118, and a gas nozzle 120. It may be noted that the laser device 106 may include other components, such as sensors and actuators, and is not limited to the components shown in FIG. 1. Further, the user interface 112 may be used to receive one or more input signals from the user. These input signals may be representative of the predetermined shape of the CMC sheet 102 that is desired by the user. Also, these input signals may be representative of a type of the CMC sheet 102. In one example, the type of the CMC sheet 102 may include a thickness of the CMC sheet 102, texture of the CMC sheet 102, and/or stiffness of the CMC sheet 102. In one embodiment, the user may use a remote device or a wireless device to send the input signals to the user interface 112.

In certain embodiments, the processor 114 is electrically coupled to the user interface 112, and configured to receive these input signals from the user interface 112. The processor 114 may process or compute the received input signals and select a laser beam based on the received input signal. In one example, the memory 116 may store a plurality of beam profiles, where each of the beam profiles may be associated with the type of the CMC sheet and/or the predetermined shape of the CMC sheet that is desired by the user. Further, the processor 114 may identify a beam profile that is corresponding to the input signal. In the embodiment of FIG. 1, the identified beam profile may include a top-hat beam profile. In one example, the top-hat beam profile may be referred to as a beam profile having uniform energy distribution and sharp edges on a focal spot of the laser beam. In one example, the laser beam may include a plurality of short laser pulses having a width less than 1 µs. Also, these short laser pulses may have a wavelength in a range from about 200 nm to about 11000 nm. In one embodiment, as the laser wavelength of the green color is easily absorbed by the CMC sheet 102, a green laser beam is used to cut the CMC sheet 102. Further, the beam generating unit 118 may generate the laser beam 122 that is associated with the identified beam profile. In one example, the identified beam profile provides sharp cut edges on the CMC sheet 102 and less thermal damages to the CMC sheet 102. In one example, the sharp cut edges may be referred to as edges of the CMC sheet 102 that are formed after cutting the CMC sheet 102 using the laser beam 122. These sharp cut edges may have negligible or no fiber wear out even under certain magnification of the CMC sheet 102.

The beam generating unit 118 may be electrically coupled to the processor 114, and configured to project the generated laser beam on the CMC sheet 102 to cut or shape the CMC sheet 102 in the predetermined shape. Particularly, the beam generating unit 118 may send the laser beam to the gas nozzle 120 which in turn projects the laser beam over the CMC sheet 102. In one example, a fiber cable may be coupled between the beam generating unit 118 and the gas nozzle 120 to send the laser beam from the beam generating unit 118 to the gas nozzle 120. Also, the gas nozzle 120 may be moved in one or more directions over the CMC sheet 102 to cut the CMC sheet 102 in the predetermined shape. In one example, one or more actuators and sensors along with other supporting structures may be used to move the gas nozzle 120 in one or more directions over the CMC sheet 102.

Further, the projected laser beam may be absorbed by the CMC sheet 102 to create a cut on the CMC sheet 102. Also, the projected laser beam may create a sharp cut edges on the CMC sheet 102. As the laser beam is used to cut the CMC sheet 102, there is no mechanical cutting force created on the CMC sheet 102. Also, with the user of laser beam, the CMC sheet 102 may be cut without or negligible material deformation, chipping and/or fiber splitting, thus keeping the cut shapes of the CMC sheet 102 within tight tolerance. In one example, the laser beam is configured to cut the CMC sheet into determined shapes within +/-0.002 micro inch size tolerance.

In one embodiment, the laser beam may be used to cut the CMC sheet 102 at a very high speed. In one example, the laser beam may cut the CMC sheet 102 at a speed that is in a range from about 0.5 in/s to about 5 in/s. A suitable cutting speed is desirable to minimize the cutting time and to enhance sharp cut edges in the determined shapes. Upon cutting or shaping the CMC sheet 102 into the predetermined shape, the CMC sheet 102 may be removed from the work table unit 104 and may be used for one or more applications.

Advantageously, by employing the exemplary laser based system 100, the CMC sheet 102 may be cut into the predetermined shape without any mechanical force, thereby avoiding material deformation, chipping and/or fiber splitting in the CMC sheet 102. Further, the exemplary laser based system 100 may shape the CMC sheet in a shorter duration of time as compared to conventional cutting tools. By way of example, the duration of time required for shaping the CMC sheet is two or three time faster than the conventional cutting tools.

Referring to FIG. 2, a diagrammatical representation of a work table unit 200, in accordance with one embodiment of the present specification, is depicted. The work table unit 200 is similar to the work table unit 104 of FIG. 1 and a fire retardant structure 202 is positioned between a base plate 204 and a CMC sheet 206. Also, in the embodiment of FIG. 2, a polymer film 208 is applied on a first surface 210 and a second surface 212 of the CMC sheet 206 to minimize or prevent undesirable movement of the CMC sheet 206 when a laser beam 214 is projected on the CMC sheet 206. Further, the polymer film 208 on the CMC sheet 206 is configured to prevent contamination of the CMC sheet 206 during shaping of the CMC sheet 206. Particularly, while cutting the CMC sheet 206 using the laser beam 214, fibers in the CMC sheet 206 may be contaminated, particularly at the edges of the cut. In one example, this contamination of the CMC sheet 206 may settle at the second surface 212 of the CMC sheet 206. To minimize or prevent the contamination of the CMC sheet 206, the polymer film 208 is applied on the first surface 210 and the second surface 212 of the CMC sheet 206. In one embodiment, the polymer film 208 may include a polyester film or a plastic film having a thickness in a range from about 25,4 µm to about 101,6 µm (about 0.001 inch to about 0.004 inch). In one example, the polyester film is a transparent mylar film. The polymer film 208 may help the user to hold or move the CMC sheet while loading and/or unloading the CMC sheet 206 from one or more locations. Further, after shaping and/or unloading the CMC sheet 206, the polymer film 208 may be removed from the first surface 210 and/or the second surface 212 of the CMC sheet 206.

In accordance with the invention the fire retardant structure 202 is disposed adjacent second surface 212 of the CMC sheet 206. The fire retardant structure 202 may be used to minimize cut damage at the second surface 212 of the CMC sheet 206. Particularly, the fire retardant structure 202 is a honey comb structure that is capable of withstanding intense heat generated by the laser beam. In one example, the fire retardant structure 202 may include an aluminum (Al) honey comb structure and/or nomex honey comb structure that are used to absorb the heat generated by the laser beam, thereby minimizing the cut damage at the second surface 212 of the CMC sheet 206.

Referring to FIG. 3, a diagrammatical representation of a work table unit 300, which is not covered by the claims, is depicted. The work table unit 300 is similar to the work table unit 200 of FIG. 2 except that an aluminum (Al) plate 302 is positioned between a base plate 304 and a CMC sheet 306. Optionally, the fire retardant structure may be positioned below the Al plate 302.

The Al plate 302 may have a plurality of slots that match with a cut pattern associated with a predetermined shape of the CMC sheet 306. Further, when the laser beam 314 is projected over the cut pattern of the CMC sheet 306, the laser beam 314 passes through a corresponding slot in the Al plate 302 and reaches the base plate 304. Also, as the Al plate 302 is a good heat conductor, the Al plate 302 may absorb heat generated by laser heating underneath honeycomb structure. This in turn minimizes contamination of the CMC sheet 306. Also, the Al plate 302 may minimize thermal damage along the cut edges of the CMC sheet 306. Further, particles or fume generated during processing or shaping of the CMC sheet 306 may be removed or dissipated from the base plate 304 with the help of an exhaust or vacuum chamber disposed underneath the base plate.

Referring to FIG. 4, a flow chart illustrating an exemplary method 400 for shaping or cutting a CMC sheet, in accordance with aspects of the present specification, is depicted. For ease of understanding, the method 400 is described with reference to the components of FIGs. 1-3. The method begins at step 402, where an input signal representative of a determined shape and a type of the CMC sheet 102 is received by the processor 114. In one example, the type of the CMC sheet 102 may include a thickness of the CMC sheet, texture of the CMC sheet, and/or stiffness of the CMC sheet. By way of example, a user may send the input signal that is representative of the determined shape and the type of the CMC sheet 102 via the user interface 112 to the processor 114.

Subsequently, at step 404, a laser beam is selected by the processor 114 based on the received input signal. To that end, the processor 114 in the laser device 106 may process the received input signal and select the laser beam based on the received input signal. For example, the processor 114 may identify a beam profile that corresponds to the input signal. In one embodiment, the identified beam profile may include a top-hat beam profile. Further, the beam generating unit 118 may generate the laser beam that corresponds to the identified beam profile. In one example, the generated laser beam corresponding to the identified beam profile provides sharp cut edges and less thermal damages to the CMC sheet 102.

Additionally, at step 406, the generated laser beam is projected on the CMC sheet 102 to cut or shape the CMC sheet 102 into the predetermined shape. To that end, a beam generating unit 118 is used to project the generated laser beam on the CMC sheet 102. Particularly, the beam generating unit 118 may send the generated laser beam to a gas nozzle 120 which in turn projects the laser beam over the CMC sheet. Also, the gas nozzle 120 may be moved in one or more directions over the CMC sheet to cut the CMC sheet in the predetermined shape. In one example, the laser beam corresponding to the identified beam profile provides sharp cut edges and minimal or negligible thermal damages to the CMC sheet 102.

Advantageously, in various embodiments, the use of laser beam for cutting or shaping the CMC sheet into a determined shape with minimal or no mechanical wear or thermal deformation of the CMC sheet. Further, the use of a suitable laser beam to shape or cut the CMC sheet provides sharp cut edges and minimal or zero thermal damages to the CMC sheet 102. Also, the duration of time required for shaping the CMC sheet is two or three time faster than the conventional cutting tools.

While only certain features of the invention have been illustrated and described herein, many modifications and changes will occur to those skilled in the art.

## Claims

1. A method (400) for shaping a ceramic matrix composite (CMC) sheet (102, 206, 306) having a first surface (210) and a second surface (212), the method comprising:
receiving (402) an input signal representative of a predetermined shape and a type of the CMC sheet;
selecting (404) a laser beam based on the received input signal; and
projecting (406) the selected laser beam on said first surface (210) of the CMC sheet to shape the CMC sheet into the predetermined shape; and
further comprising providing a fire retardant structure (202) disposed adjacent the second surface (212) of the CMC sheet (206) to minimize cut damage at the second surface of the CMC sheet.

2. The method of claim 1, wherein the selected laser beam comprises a plurality of short laser pulses having a width less than 1 µs and/or a wavelength in a range from about 200 nm to about 11000 nm.

3. The method of claim 1, wherein selecting the laser beam comprises:
identifying a beam profile corresponding to the received input signal, wherein
the identified beam profile comprises a top-hat beam profile; and
selecting the laser beam comprising the identified beam profile, wherein the identified beam profile provides sharp cut edges on the CMC sheet.

4. The method of claim 1, further comprising applying a polymer film (208) on the first (210) and second surfaces (212) of the CMC sheet (206) prior to projecting the selected laser beam on the CMC sheet, wherein the polymer film (208) preferably comprises a polyester film having a thickness in a range from 25,4 µm (0.001 inch) to 101,6 µm (0.004 inch).

5. The method of any of claims 3 or 4, wherein the CMC sheet (102, 206, 306) is shaped into the predetermined shape without substantial thermal deformation in the CMC sheet.

6. A system for shaping a ceramic matrix composite (CMC) sheet (102, 206, 306) having a first surface (210) and a second surface (212) in a predetermined shape, the system comprising:
a base plate (204, 304) configured to support the CMC sheet having a first surface (210) and a second surface (212), wherein the base plate (204, 306) is coupled to the second surface (212) of the CMC sheet (206);
a laser device (106) comprising:
a user interface (112) configured to receive an input signal representative of a predetermined shape and a type of the CMC sheet;
a processor (114) coupled to the user interface (112) and configured to select a laser beam (122, 214, 314) based on the received input signal; and
a beam generating unit (118) coupled to the processor (114) and configured to project the selected laser beam on the first surface (210) of the CMC sheet to shape the CMC sheet in the predetermined shape; and
a fire retardant structure (202) configured to be positioned between the base plate (204) and the CMC sheet (206) and configured to minimize cut damage at the second surface (212) of the CMC sheet (206).

7. The system of claim 6, further comprising:
a polymer film (208) disposed on at least one of the first surface (210) and the second surface (212) of the CMC sheet (206) and configured to avoid contamination of the CMC sheet (206).

8. The method of claims or the system of claims 7, wherein the fire retardant structure is a honey comb structure configured to withstand intense heat generated by the laser beam.

9. The method or system of claim 8, wherein the fire retardant structure comprises an aluminum (Al) honey comb structure and/or nomex honey comb structure configured to absorb heat generated by the laser beam.

## Patentansprüche

1. Verfahren (400) zum Formen einer Keramikmatrixverbundstoff(*ceramic matrix composite* - CMC)dünnschicht (102, 206, 306), die eine erste Oberfläche (210) und eine zweite Oberfläche (212) aufweist, wobei das Verfahren Folgendes umfasst:
Empfangen (402) eines Eingangssignals, das eine vorgegebene Form und eine Art der CMC-Dünnschicht darstellt;
Auswählen (404) eines Laserstrahls basierend auf dem empfangenen Eingangssignal; und
Projizieren (406) des ausgewählten Laserstrahls auf die erste Oberfläche (210) der CMC-Dünnschicht, um die CMC-Dünnschicht in die vorgegebene Form zu formen; und
das ferner ein Bereitstellen einer feuerhemmenden Struktur (202) umfasst, die angrenzend an die zweite Oberfläche (212) der CMC-Dünnschicht (206) angeordnet ist, um eine Schnittbeschädigung an der zweiten Oberfläche der CMC-Dünnschicht zu minimieren.

2. Verfahren nach Anspruch 1, wobei der ausgewählte Laserstrahl mehrere kurze Laserpulse umfasst, die eine Breite von weniger als 1 µs und/oder eine Wellenlänge in einem Bereich von etwa 200 nm bis etwa 11 000 nm aufweisen.

3. Verfahren nach Anspruch 1, wobei das Auswählen des Laserstrahls Folgendes umfasst:
Identifizieren eines Strahlprofils, das dem empfangenen Eingangssignal entspricht, wobei das identifizierte Strahlprofil ein Top-Hat-Strahlprofil umfasst; und
Auswählen des Laserstrahls, der das identifizierte Strahlprofil umfasst, wobei das identifizierte Strahlprofil scharfe Schnittkanten auf der CMC-Dünnschicht bereitstellt.

4. Verfahren nach Anspruch 1, das ferner ein Aufbringen eines Polymerfilms (208) auf die erste (210) und die zweite Oberfläche (212) der CMC-Dünnschicht (206) vor dem Projizieren des ausgewählten Laserstrahls auf die CMC-Dünnschicht umfasst, wobei der Polymerfilm (208) vorzugsweise einen Polyesterfilm umfasst, der eine Dicke in einem Bereich von 25,4 µm (0,001 Zoll) bis 101,6 µm (0,004 Zoll) aufweist.

5. Verfahren nach einem der Ansprüche 3 oder 4, wobei die CMC-Dünnschicht (102, 206, 306) ohne wesentliche thermische Verformung in der CMC-Dünnschicht in die vorgegebene Form geformt wird.

6. System zum Formen einer Keramikmatrixverbundwerkstoff(CMC)dünnschicht (102, 206, 306), die eine erste Oberfläche (210) und eine zweite Oberfläche (212) aufweist, in eine vorgegebene Form, wobei das System Folgendes umfasst:
eine Bodenplatte (204, 304), die konfiguriert ist, um die CMC-Dünnschicht, die eine erste Oberfläche (210) und eine zweite Oberfläche (212) aufweist, zu tragen, wobei die Bodenplatte (204, 306) mit der zweiten Oberfläche (212) der CMC-Dünnschicht (206) gekoppelt ist;
eine Laservorrichtung (106), die Folgendes umfasst:
eine Benutzerschnittstelle (112), die konfiguriert ist, um ein Eingangssignal zu empfangen, das eine vorgegebene Form und eine Art der CMC-Dünnschicht darstellt;
einen Prozessor (114), der mit der Benutzerschnittstelle (112) gekoppelt und konfiguriert ist, um einen Laserstrahl (122, 214, 314) basierend auf dem empfangenen Eingangssignal auszuwählen; und
eine Strahlerzeugungseinheit (118), die mit dem Prozessor (114) gekoppelt und konfiguriert ist, um den ausgewählten Laserstrahl auf die erste Oberfläche (210) der CMC-Dünnschicht zu projizieren, um die CMC-Dünnschicht in die vorgegebene Form zu formen; und
eine feuerhemmende Struktur (202), die konfiguriert ist, um zwischen der Bodenplatte (204) und der CMC-Dünnschicht (206) positioniert zu werden und konfiguriert ist, um die Schnittbeschädigung an der zweiten Oberfläche (212) der CMC-Dünnschicht (206) zu minimieren.

7. System nach Anspruch 6, das ferner Folgendes umfasst:
einen Polymerfilm (208), der auf der ersten Oberfläche (210) und/oder der zweiten Oberfläche (212) der CMC-Dünnschicht (206) angeordnet und konfiguriert ist, um eine Kontamination der CMC-Dünnschicht (206) zu vermeiden.

8. Verfahren nach den Ansprüchen oder System nach den Ansprüchen 7, wobei die feuerhemmende Struktur eine Wabenstruktur ist, die konfiguriert ist, um eine starke Wärme, die durch den Laserstrahl erzeugt wird, auszuhalten.

9. Verfahren oder System nach Anspruch 8, wobei die feuerhemmende Struktur eine Aluminium(Al)wabenstruktur und/oder eine Nomex-Wabenstruktur umfasst, die konfiguriert ist, um die Wärme, die durch den Laserstrahl erzeugt wird, zu absorbieren.

## Revendications

1. Procédé (400) de mise en forme d'une feuille de composite à matrice céramique (CMC) (102, 206, 306) ayant une première surface (210) et une seconde surface (212), le procédé comprenant :
la réception (402) d'un signal d'entrée représentant une forme prédéterminée et un type de la feuille CMC ;
la sélection (404) d'un faisceau laser sur la base du signal d'entrée reçu ; et
la projection (406) du faisceau laser sélectionné sur ladite première surface (210) de la feuille CMC pour mettre en forme la feuille CMC selon la forme prédéterminée ; et
comprenant en outre la fourniture d'une structure ignifuge (202) disposée de manière adjacente à la seconde surface (212) de la feuille CMC (206) pour réduire au minimum l'endomagemment lié à la découpe sur la seconde surface de la feuille CMC.

2. Procédé selon la revendication 1, le faisceau laser sélectionné comprenant une pluralité d'impulsions laser brèves ayant une largeur inférieure à 1 µs et/ou une longueur d'onde dans une plage d'environ 200 nm à environ 11 000 nm.

3. Procédé selon la revendication 1, le faisceau laser sélectionné comprenant :
l'identification d'un profil de faisceau correspondant au signal d'entrée reçu, le profil de faisceau identifié comprenant un profil de faisceau en chapeau haut-de-forme ; et
la sélection du faisceau laser comprenant le profil de faisceau identifié, le profil de faisceau identifié fournissant des bords coupés nets sur la feuille CMC.

4. Procédé selon la revendication 1, comprenant en outre l'application d'un film polymère (208) sur les première (210) et seconde surfaces (212) de la feuille CMC (206) avant de projeter le faisceau laser sélectionné sur la feuille CMC, le film polymère (208) comprenant de préférence un film de polyester ayant une épaisseur dans une plage de 25,4 µm (0,001 pouce) à 101,6 µm (0,004 pouce).

5. Procédé selon l'une quelconque des revendications 3 ou 4, la feuille CMC (102, 206, 306) étant mise en forme selon la forme prédéterminée sans déformation thermique importante dans la feuille CMC.

6. Système de mise en forme d'une feuille de composite à matrice céramique (CMC) (102, 206 306) ayant une première surface (210) et une seconde surface (212) selon une forme prédéterminée, le système comprenant :
une plaque de base (204, 304) conçue pour soutenir la feuille CMC ayant une première surface (210) et une seconde surface (212), la plaque de base (204, 306) étant accouplée à la seconde surface (212) de la feuille CMC (206) ;
un dispositif laser (106) comprenant :
une interface utilisateur (112) configurée pour recevoir un signal d'entrée représentant une forme prédéterminée et un type de la feuille CMC ;
un processeur (114) couplé à l'interface utilisateur (112) et configuré pour sélectionner un faisceau laser (122, 214, 314) sur la base du signal d'entrée reçu ; et
une unité de génération de faisceau (118) couplée au processeur (114) et configurée pour projeter le faisceau laser sélectionné sur la première surface (210) de la feuille CMC pour mettre en forme la feuille CMC selon la forme prédéterminée ; et
une structure ignifuge (202) conçue pour être positionnée entre la plaque de base (204) et la feuille CMC (206) et conçue pour réduire au minimum l'endomagemment lié à la découpe sur la seconde surface (212) de la feuille CMC (206).

7. Système selon la revendication 6, comprenant en outre :
un film polymère (208) disposé sur la première surface (210) et/ou la seconde surface (212) de la feuille CMC (206) et conçu pour éviter la contamination de la feuille CMC (206).

8. Procédé selon les revendications ou système selon la revendication 7, la structure ignifuge étant une structure en nid d'abeille conçue pour résister à une chaleur intense générée par le faisceau laser.

9. Procédé ou système selon la revendication 8, la structure ignifuge comprenant une structure en nid d'abeille en aluminium (Al) et/ou une structure en nid d'abeille en nomex conçue pour absorber la chaleur générée par le faisceau laser.
